# EUROPEAN PATENT APPLICATION

(11) **EP 2 787 449 A2**
(43) Date of publication of application: **08.10.2014**
(21) Application number: 14160561.8
(22) Date of filing: 18.03.2014
(51) Int. Cl.: G06F 17/22, G06F 17/27

(54) **Text data processing method and corresponding electronic device**

(30) Priority: 02.04.2013 KR 20130035991
(71) Applicant: Samsung Electronics Co., Ltd., Suwon-si Gyeonggi-do 443-742 (KR)
(72) Inventor: Yeo, Jae-Yung, Gyeonggi-do (KR); Huh, Moon-Ki, Gyeonggi-do (KR)
(74) Representative: Nederlandsch Octrooibureau

(57) **Abstract**

A system processes text message data in an electronic device by, receiving first text data, determining a first language of the first text data, automatically translating the first text data into second text data in a predetermined second language in response to determining the first language and outputting the second text data.

## Description

### BACKGROUND

### 1. Technical Field

The present system concerns a text data processing system used by an electronic device such as a smart phone, for example.

### 2. Description of the Related Art

Known electronic devices such as smart phones comprise multimedia devices providing different functions supporting a camera, data communication, broadcasting, moving picture replay, audio replay, messenger, scheduling, and alarm functions as well as voice communication, for example. An electronic device purchased in a first country may well be used in a second country. For example, an electronic device purchased in Korea may be used in the US. In this case, the electronic device may use US mobile communication services or Korean mobile communication services through roaming. A user employing a language of a first country using an electronic device in a second country may receive a text message in a language of a second country. The user may require the text message in the second country's language to be translated into the first country's language with the help of an online or offline translation program, or another person.

### SUMMARY

A system usable by an electronic device advantageously determines a language of a received text message and seamlessly communicates a translated message to a user by translating the text message into a language selected by an operating system (OS) in the electronic device or selected in response to predetermined preference of a user. The system advantageously determines whether a language of response text message data input by a user as a reply in response to a received text message is the same as of the language of the original received text message, and seamlessly translates and communicates translated input message data as a reply.

A system processes text message data in an electronic device by, receiving first text data, determining a first language of the first text data, automatically translating the first text data into second text data in a predetermined second language in response to determining the first language and outputting the second text data.

In a feature, the first language of the first text data is determined in response to a characteristic of characters comprising the first text data set and a characteristic of the encoding character set used to represent the characters. The second text data is converted into the second language corresponding to the first text data using a language table associating words of a first language with corresponding words of a second language, stored in the electronic device. Further, the first language is determined in response to code values of a standard character encoding set or a character set, of the first text data, or language identification codes included in the first text data. The system compares the first language of the first text data with the second language of the second text data, wherein the first or second language is identified using codes included in standard character encoding or a character set of the first or second text data, or language identification codes included in the first or second text data.

In another feature, the predetermined second language is determined as at least one of a country language used in an operating system of the electronic device and a country language corresponding to a code of a country associated with the electronic device. The predetermined second language is selected via data entered using a displayed menu indicating different languages and the system displays the first text data in the first language or the second text data in the second language.

In another feature, a method processes text message data in an electronic device, by receiving first text data in a first language, enabling input of second text data in a second language, which is different from the first language, as a reply to the first text data and automatically translating the second text data into third text data in the first language in response to the input second text data. The third text data is transmitted to a destination. Fourth text data is displayed in the second language corresponding to the first text data, or the first text data and fourth text data in the second language corresponding to the first text data. The method displays the second text data, or the second text data and the third text data.

In yet another feature, an electronic device comprises at least one processor, at least one communication system for communicating with a second electronic device, at least one memory and at least one program stored in the memory and executed by the at least one processor. The program comprises instructions for receiving first text data, determining a first language of the first text data, automatically translating the first text data into second text data in a predetermined second language in response to determining the first language and outputting the second text data. The program comprises instructions for comparing the first language of the first text data with the second language of the second text data, wherein the first or second language is identified using codes included in standard character encoding or a character set of the first or second text data, or a language identification codes included in the first or second text data. The program comprises instructions for determining the first language of the first text data in response to a characteristic of characters comprising the first text data set and a characteristic of the encoding character set used to represent the characters. The program comprises instructions for obtaining the second language corresponding to the first text data using a language table associating words of a first language with corresponding words of a second language, stored in the electronic device. The program comprises instructions for determining, as the second language, at least one of a country language used in an operating system of the electronic device and a country language corresponding to a code of a country associated with the electronic device. The program comprises instructions for displaying a menu indicating different languages and enabling the second language to be selected from among the different languages. The program comprises instructions for displaying the first text data in the first language or the second text data in the second language.

In a further feature, an electronic device executes a program comprising instructions for receiving first text data in a first language, enabling input of second text data in a second language, which is different from the first language, as a reply to the first text data, transmitting third text data in the first language corresponding to the second text data in response to input of the second text data. The program comprises instructions for displaying fourth data in the second language corresponding to the first text data, or the first text data and fourth text data in the second language corresponding to the first text data and automatically translating the second text data into third text data in the first language in response to the input second text data.

In an additional feature, a method used in processing text in an electronic device, receives first text data, determines a first language corresponding to the first text data, outputs second text data in a predetermined second language corresponding to the first text data in response to determining the first language, enables third text data to be input in a second language as a reply to the first text data and transmits fourth text data in the first language corresponding to the third text data in response to the input of the third text data.

### BRIEF DESCRIPTION OF THE DRAWINGS

The above and other objects, features and advantages of the system will become more apparent from the following detailed description when taken in conjunction with the accompanying drawings in which:
FIG. 1 shows an electronic device according to invention principles;
FIG. 2 shows a processor of an electronic device according to invention principles;
FIG. 3A shows a user interface (UI) operation image screen of an electronic device according to invention principles;
FIG. 3B shows a user interface (UI) operation image screen of an electronic device according to invention principles;
FIG. 4A shows a user interface (UI) operation image screen of an electronic device according to invention principles;
FIG. 4B shows a user interface (UI) operation image screen of an electronic device according to invention principles;
FIG. 5A shows a user interface (UI) operation image screen of an electronic device according to invention principles;
FIG. 5B shows a user interface (UI) operation image screen of an electronic device according to invention principles;
FIG. 5C shows a user interface (UI) operation image screen of an electronic device according to invention principles;
FIG. 5D shows a user interface (UI) operation image screen of an electronic device according to invention principles;
FIG. 5E shows a user interface (UI) operation image screen of an electronic device according to invention principles;
FIG. 6A shows a user interface (UI) operation image screen of an electronic device according to invention principles;
FIG. 6B shows a user interface (UI) operation image screen of an electronic device according to invention principles;
FIG. 7A shows a user interface (UI) operation image screen of an electronic device according to invention principles;
FIG. 7B shows a user interface (UI) operation image screen of an electronic device according to invention principles;
FIG. 8A shows a flowchart of a method of operation of an electronic device according to invention principles; and
FIG. 8B shows a flowchart of a method of operation of an electronic device according to invention principles.

### DETAILED DESCRIPTION

Preferred embodiments will be described herein below with reference to the accompanying drawings. In the following description, detailed descriptions of well-known functions or constructions will be omitted since they would obscure the invention in unnecessary detail. An electronic device 100 may include a mobile communication terminal, a personal digital assistant (PDA), a PC, a laptop computer, a smart phone, a smart TV, a netbook, a mobile internal device (MID), an ultra mobile PC (UMPC), a tablet PC, a mobile pad, a media player, a handheld computer, navigation, an MPEG-1 audio layer-3 player (MP3P), and a server, for example. The electronic device 100 may employ a device including a touch screen which may comprise an input and display device. The system is not limited to the electronic device including the touch screen, and it may be applied to various electronic devices having a display unit. A component connected or linked to another component, may comprise a component directly connected or linked to another component, but it may also mean that another component is interposed between the component and the other component.

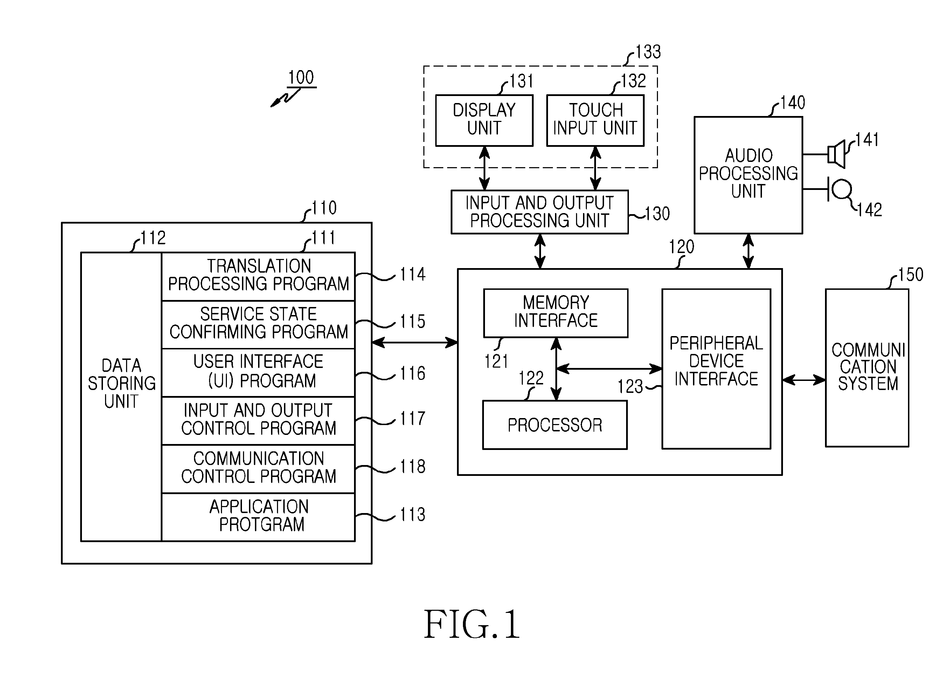

FIG. 1 shows electronic device 100 including a memory 110 and processor unit 120, and may also include, as peripheral devices, an input and output processing unit 130, a display unit 131, an input unit 132, an audio processing unit 140, a communication system 150, and other peripheral devices. The memory 110 may include a program storing unit 111 storing programs for controlling operations of the electronic device 100, and a data storing unit 112 storing data created during performing of the programs, and storing data created by programs due to operation of a processor 122. For example, the data storing unit 112 may store text message data received from a second electronic device (not shown), a translated text message, and a text message input to the electronic device 100. Also, the data storing unit 112 may store a language data conversion table or a database, when a translation processing program 114 includes the language data conversion table converting text message data formed of a second country's language into data of a main language or a target language of the electronic device 100, or the database. The program storing unit 111 may include at least one application program 113, a user interface (UI) program 116, a communication control program 118, a service state program 115 and an input and output control program 117. Here, programs included in the program storing unit 111 are formed of a set of instructions and may be represented as an instruction set.

The translation process program 114 may determine a language including codes such as standard character encoding or a character set of received text message data, when the electronic device 100 receives a text message. Also, the translation process program 114 may set a default (main or target) language of the electronic device 100 via an operating system (OS), a country code associated with the electronic device 100, or a predetermined setting established using a setting menu. The translation process program 114 may also compare a language of the text message received by the electronic device 100 with the main or target language of the electronic device 100. Furthermore, the translation process program 114 may automatically convert the text message data received by the electronic device 100 into data corresponding to the main or target language of the electronic device 100. For the conversion, the translation process program 114 may employ a database or a translation program for converting text data such as standard character encoding or a character set corresponding to a first country's language into text data such as standard character encoding or a character set corresponding to a second country's language. The conversion may be performed using an Internet application, a database of a particular server, or a translation program. Translation or conversion comprises change of text message data of a first country's language into text message data of a second country's language. As used herein, conversion and translation are used interchangeably to mean the same operation of text conversion of one type, language or data format to another different type, language or data format.

A text message may include various message types containing text such as a short message service (SMS), a long message service (LMS), a multimedia message service (MMS), or a concatenated SMS (CSMS). A service state confirming program 115 may include at least one software element for confirming a state of a service provided by programs or configuration devices of the electronic device 100. The UI program 116 may include at least one instruction or a software element for providing the UI in the electronic device 100. For example, the UI program 116 may convert codes such as standard character encoding or a text set into corresponding texts or sounds and output the texts or sounds on a touch screen 133 or through a speaker 141.

The input and output control program 117 may display operations of the electronic device 100 on the display 131, and receive operation commands of the electronic device through an input device 132. For example, a communication control program 117 may search for a second electronic device for a communication connection and establish a connection for communication with the second electronic device. The communication control program 117 may perform a performance search and session establishment procedure with the connected second electronic device to exchange data such as alarm information using communication system 150.

The application program 113 may include software elements for at least one application program installed in the memory 110 of the electronic device 100. The memory 110 included in the electronic device 100 may be formed of one or more of memories. Also, the memory 110 may perform as the program storing unit 111, as the data storing unit 112, or both of them. However, physical area division inside the memory 110 may be not clear due to characteristics of the electronic device 100. The processor unit 120 may include a memory interface 121, at least one processor 122, and a peripheral interface 123. Here, the memory interface 121, the at least one processor 122, and the peripheral interface 123 included in the processor unit 120 may be integrated into at least one circuit or implemented as separate components. The memory interface 121 may control access to components such as the processor 122 or the peripheral device interface 123. The peripheral device interface 123 may control connection of input and output peripheral devices of the electronic device 100 to the processor 122, and the memory interface 121. The processor 122 may control the electronic device 100 to provide different services such as multimedia or communication by using at least one software program, display commands and data associated with operation of the electronic device 100 on the display unit 131 and enables user interaction. Processor 122 may execute at least one program stored in the memory 110 and provide services corresponding to the executed program.

The audio processing unit 140 may provide an audio interface between a user and the electronic device 100 through a speaker 141 and a microphone 142. The communication system 150 may perform a communication function and may communicate with a second electronic device by using at least any one of a mobile communication through a base station, near field communication such as infrared data association (IrDA), Bluetooth, or Wireless Fidelity (WiFi), wireless LAN communication, and wired communication. The input and output processing unit 130 may provide an interface between an input and output device such as the display unit 131 and the input device 132, and the peripheral device interface 123. The input device 132 may provide input data created by user's selection to the processor unit 120 through the input and output processing unit 130. For example, the input device 132 may be configured with control buttons, or a keypad. The input device 132 may comprise touch screen 133 using a capacitive scheme, an infrared scheme, an electromagnetic resonance scheme, or an ultrasonic scheme. The display unit 131 may receive state information concerning the electronic device 100, text, moving pictures or still images. The touch screen 133 has a touch input device 132.

In the description of an embodiment of the present invention, a display on the electronic device 100, or an output to the electronic device 100 may use to display a moving picture, a still image or GUI operations on the touch screen or a second display unit of the electronic device 100, or an audio output scheme of signal sounds or voices through the speaker 141. In description below, the same display or output may be used having the same meaning.

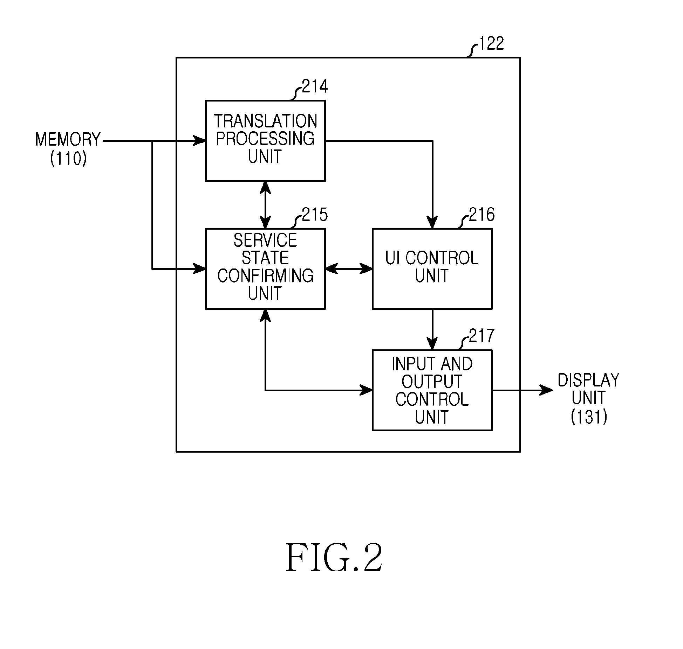

FIG. 2 shows a processor 122 configuration including a translation processing unit 214, a service state confirming unit 215, a UI control unit 216, and an input and output control unit 217. The translation processing unit 214 may process a text message received by the electronic device 100 through the translation processing program 114. For example, when the electronic device 100 receives a text message, the translation processing unit 214 may determine whether the text message is configured in a second country's language. For another example, when the electronic device 100 determines that a received text message is configured in a second country's language, the translation processing unit 214 may automatically translate the text message into a designated first country's language. For another example, the electronic device 100 transmits a text message automatically translated into the second country's language. The service state confirming unit 215 may execute the service state confirming program 115 to manage relationships and data sharing between the programs and units inside the electronic device 100.

For example, the service state confirming program 115 may manage the translation processing program 114 in receiving and processing an input reply message using the memory 110 and in transmitting a further response message. For another example, the service state confirming program 115 may direct UI control unit 216 to configure a UI operation involving using text message data translated by the translation processing unit 214, direct the input and output control unit 217 in a UI operation or in processing a reply message received from the input and output control unit 217. For anther example, the service state confirming program 115 may direct the input and output control unit 217 in processing a translated text message via UI control unit 216, and to receive an input reply text message. The UI interface control unit 216 interacts with the UI program to configure visual information via touch screen 133 of the electronic device 100. The input and output control unit 217 interacts with the input and output control program 117 to manage operation of the electronic device 100 via visual information provided by the UI control unit 216 on the touch screen 133, and to receive commands the touch screen 133.

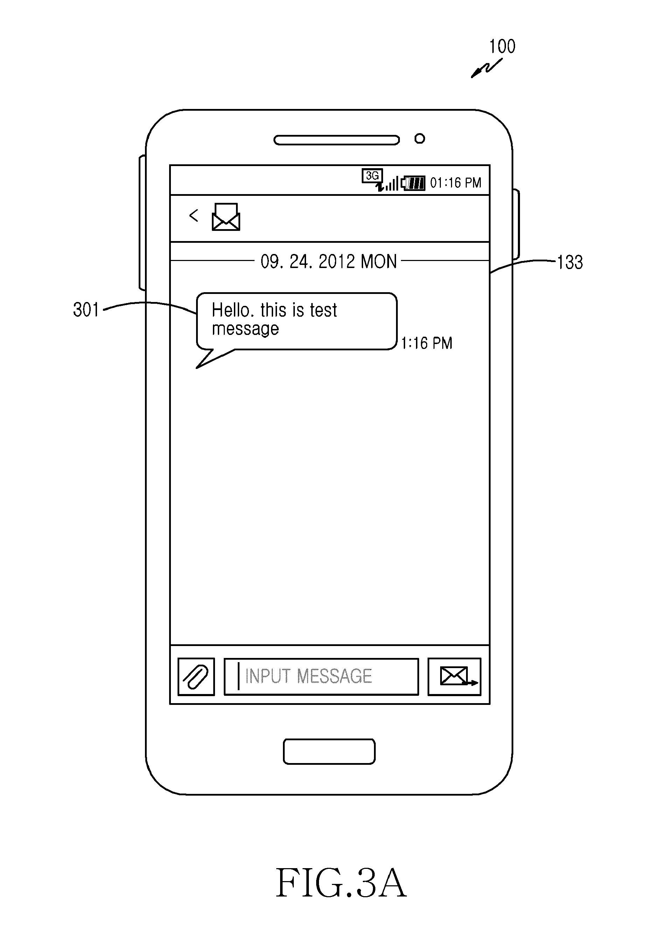

FIG. 3A shows a user interface (UI) operation image screen of an electronic device 100 that may use Korean as a first country's language, namely, a main language used in a system, An English (second country) language text message is received and device 100 may be released in Korea with Korean language set for use as a main language. The translation program 114 may obtain a code of the released country of the electronic device 100, designate the language used by the system of the electronic device 100 as a main language in response to the code, or designate the main language in response to a predetermined setting or during the translation program 114 initial operation. The electronic device 100 may use Korean mobile communication services in Korea, US mobile communication services in the US, Chinese mobile communication services in China, or Korean mobile communication services in a second country via roaming. When a main language used in the system of the electronic device 100 is Korean, a text message 301 in English may be received. When a user is not familiar with English, the user may translate the text message 301 into Korean by using a translation program. In a known system, in order to translate the text message 301 a translation program is executed, a translation source language is selected text message 301 is input or copied for use by the translation program, and a translation target language is selected.

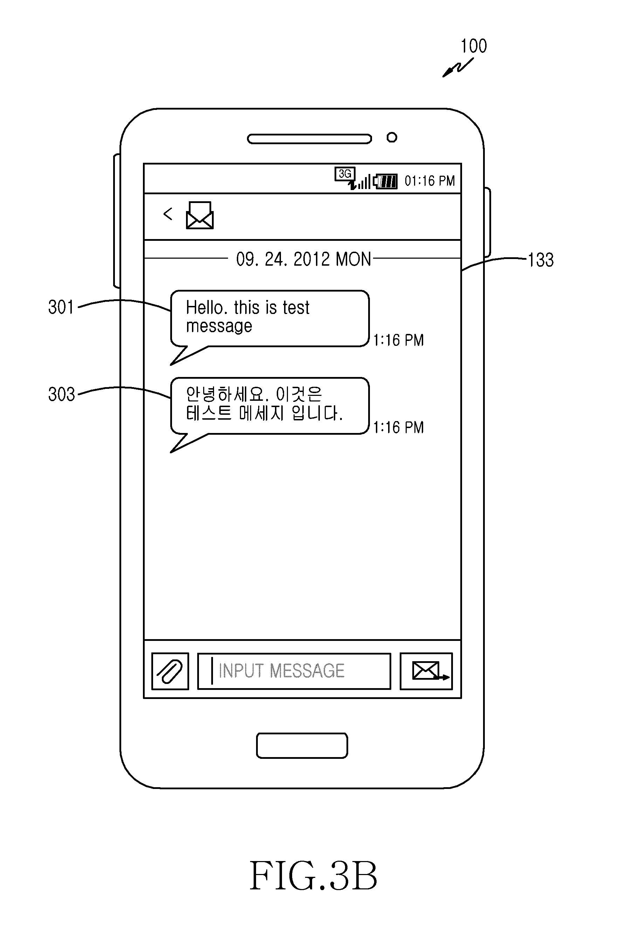

In the system automatically determines a language of a text message received by the electronic device 100, and translates the text message into a main language when the determined language is different from the main language. FIG. 3B shows a user interface (UI) image screen of an electronic device. Device 100 detects the received text message is in English, translates the text message into Korean, which is the main language of the electronic device 100, and outputs the translated text message. For example, when the electronic device 100 receives text message 301 the device may translate the text message into the main language through the translation program 114 or an online translation program, and outputs translated message 303. The electronic device 100 of FIG. 3B may be used in a second country, when Korea is considered as a first country. Device 100 may include, in the memory 110, radio wave use range data that designates radio communication parameters (a frequency band, for example) in an electronic device released country, data such as an identification code identifying a device 100 released country in addition to data for countries in which the electronic device 100 is useable, and designating the second country in which a radio wave used by the electronic device 100 is also useable.

The electronic device 100 may obtain the identification code to determine a language used in a country as well as the identification code of a main language.

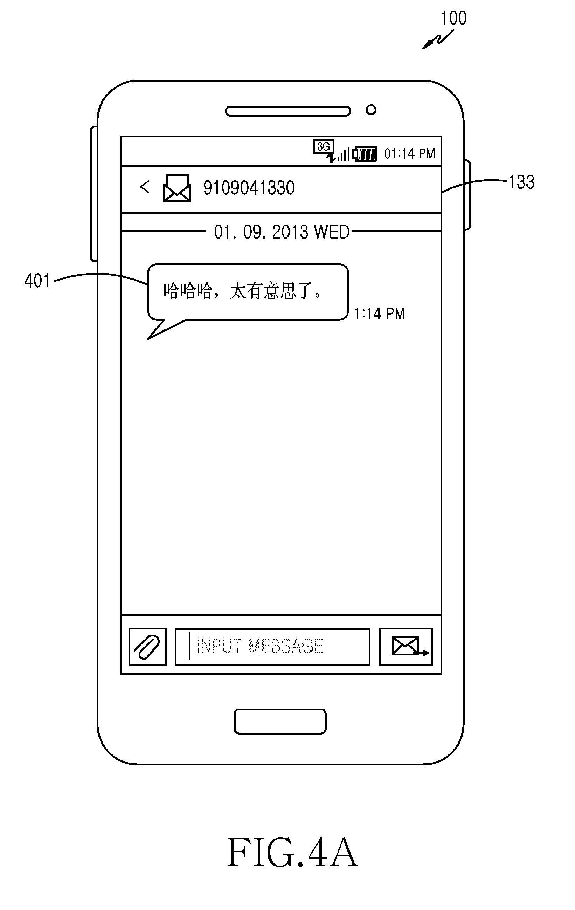

FIG. 4A shows a user interface (UI) operation image screen of an electronic device 100 that may obtain an electronic device released country code, language information used in the system to automatically designate a main language of the electronic device 100, or may determine the main language through a predetermined setting. In response to device 100 using Korean as a main language and receiving a text message in a second country's language, it may translate the text message into a third country's language (a target language) set in a setting and output the translated text message without translation into Korean. For example, the electronic device 100 may use Korean obtained from information such as identification code such as the released country code of the electronic device 100, or information on a language used in a system as a main language, and compare the received text message with English, not Korean which is the main language, in response to a setting of the electronic device 100. Although the electronic device 100 uses Korean as the main language, it compares the text message with English and it uses English as a designated translation target language. An identification code for identifying the language or a promised protocol may be used in an embodiment. Message 401 indicates that, when Korean is used as a main language and a text message in Chinese is received by the electronic device 100 which uses English as a target language, the text message is determined as Chinese, and the received text message is output in Chinese without any change.

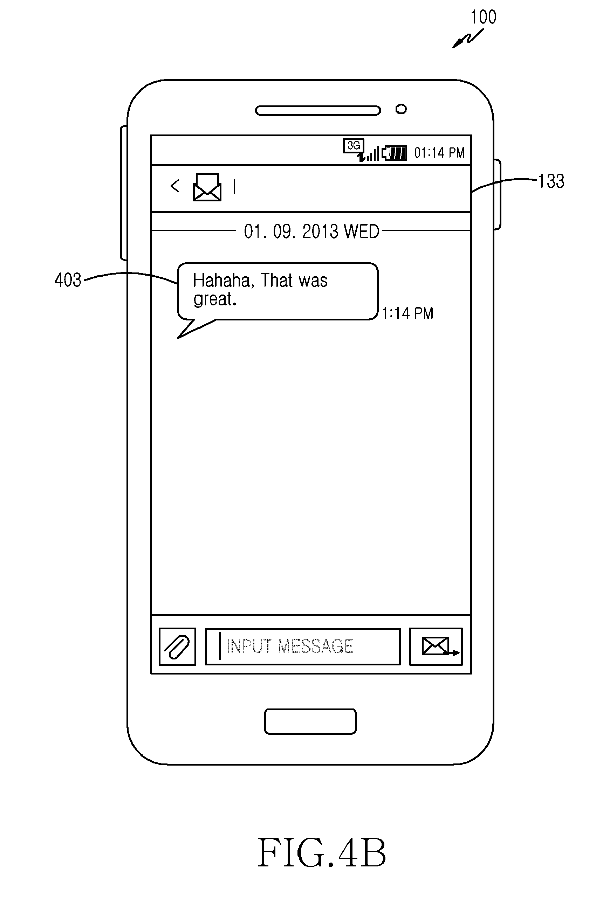

FIG. 4B shows a user interface (UI) operation image screen of an electronic device 100 that may use a first country's language as a main language. When receiving a text message in a second country's language, the electronic device 100 may not translate the text message into the first country's language which is a main language, but translate it into a third country's language which is a target language designated in the setting of the electronic device 100 and output the translated message. For example, the electronic device 100 with Korean as a main language receives a message in Chinese, and translates the message into English 403 (not into Korean) as a predetermined target language designated in a setting menu. The text message received from a phone number 9109041330 may be translated by using an online translation program through the internet, and a specific server, and be transmitted as a text message and not displayed

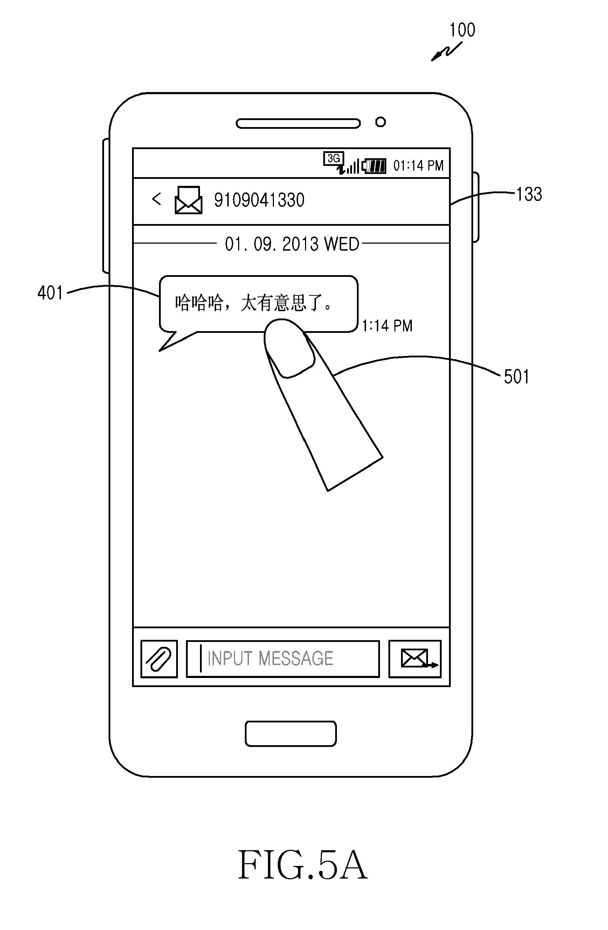

FIG. 5A shows a user interface (UI) operation image screen of an electronic device 100 that may use Korean as a main language. When receiving a text message in a language different from a main language, the electronic device 100 is designated to perform translation via input commands or gestures. In response to receiving a text message 401 in Chinese, the electronic device 100 does not automatically translate the text message 401 into Korean but performs translation of the text message 401 in response to touch operation 501 and outputs the translated text message.

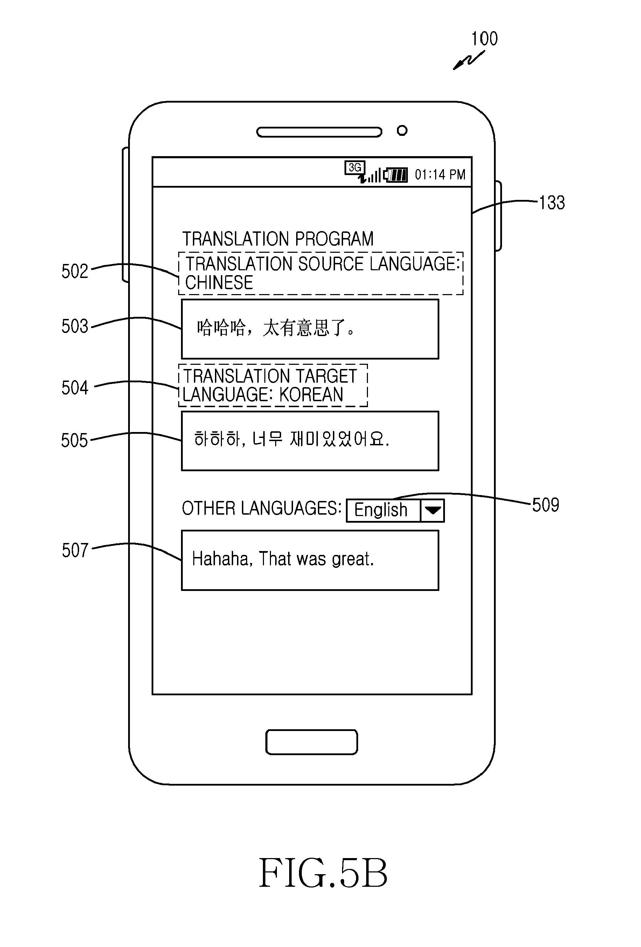

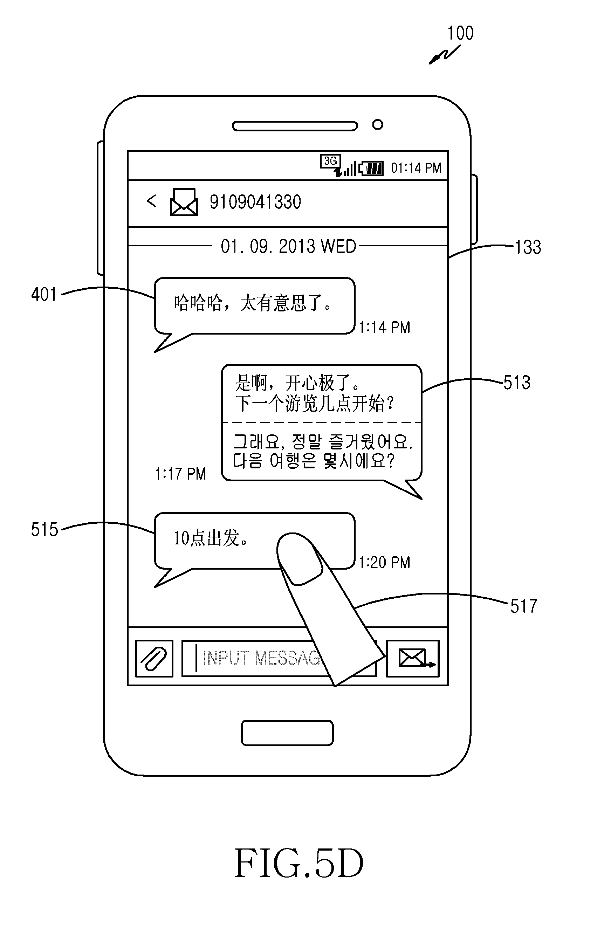

Here, the selected text message comprises message 401, 513, or 515 as shown in FIG. 4A and FIG. 5D. A selected text message may be selected from different text messages in different areas on the touch screen 133 through a touch, drag, or release operation. The different text messages may be in a dialogue type form on the touch screen 133. FIG. 5B shows a user interface (UI) operation image screen of an electronic device where a text message in a second country's language is displayed and selected on the touch screen 133, translated from the second country's language into a main language or a target language, and displayed on the touch screen 133. The translation program 114 determines a language of the Chinese text message, translates the text message into the main language of device 100 or the target language, and outputs text message content 503 or translated text message content 505 respectively corresponding to a translation source language (a language to be translated) 502 or a translation target language (the main language or the target language of the electronic device 100) 504. In addition, the electronic device 100 may provide a menu 509 allowing a user to select a third country's language besides Chinese and Korean. When English is selected as the third country's language 509, device 100 may translate content 503 in the translation source language 502 or content 505 corresponding to the translation target language 504 into English 509 and output translated content 507. The electronic device 100 may provide a menu allowing a user to select different languages besides English as the desired third country's language 509.

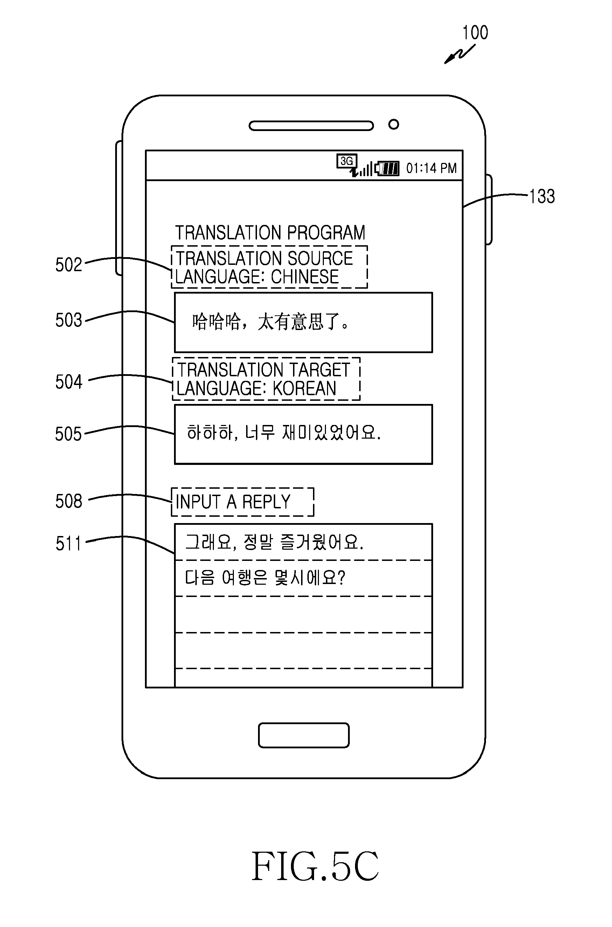

FIG. 5C shows a user interface (UI) operation image screen of an electronic device 100 that may output a text message in the second country's language, a translated text message into the main language of the electronic device 100, or a translated text message into the target language, and transmits a text message in response to entered reply input text processed by the translation program. Device 100 may select a text message 401 in Chinese, execute the translation program 114 in FIG. 5A, and output content 503 in the translation source language (a language to be translated, for example, 401 of FIG. 5A), or content 505 of the translation target language. Furthermore, the electronic device 100 may provide a menu 508 allowing a reply to be input in response to a confirmed text message through the translation program. When the reply is input in Korean, the electronic device 100 may automatically compare Korean which is a language of the input text message 511 with Chinese which is a translation source language 502. When the two languages are not the same, the electronic device 100 may translate the input text message 511 and transmit the translated text message. Otherwise, the electronic device 100 may transmit the input text message 511 without any change. Also, the operation of comparing the language of the input text message 511 and the language of the translation source language 502 may be also applied to an operation of receiving a text message as a reply to a received text message.

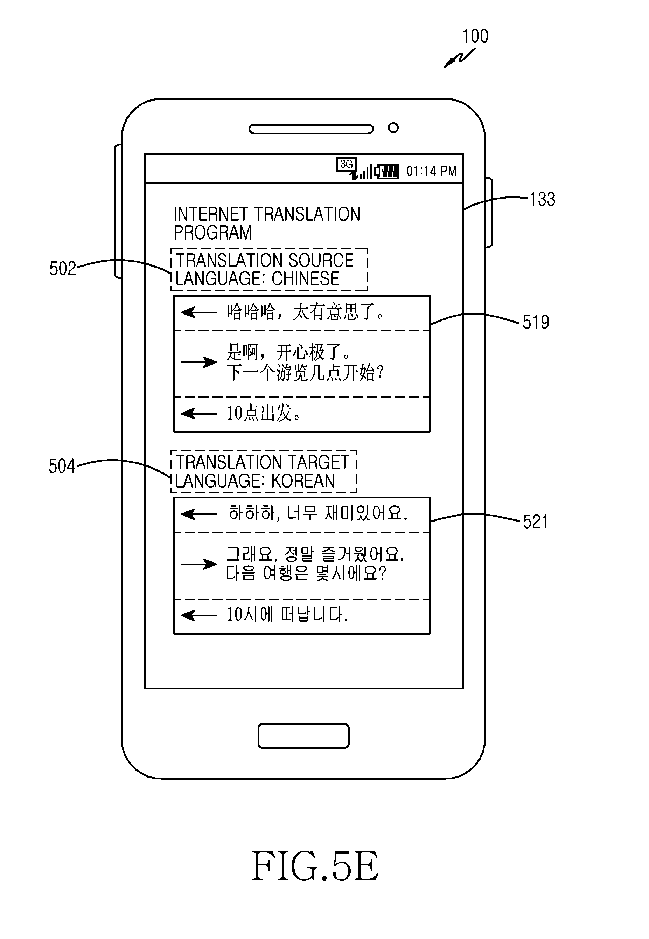

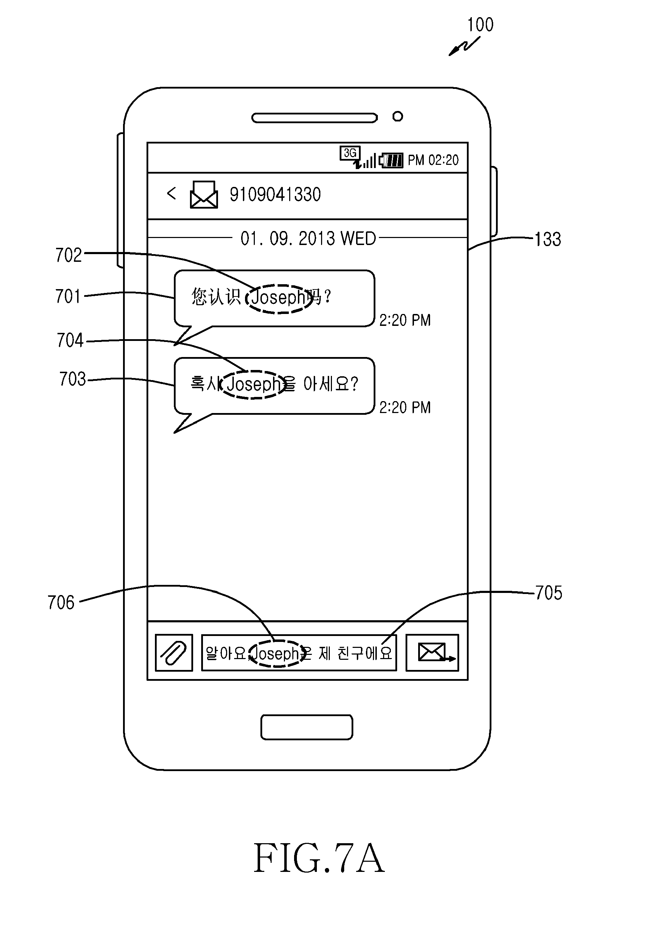

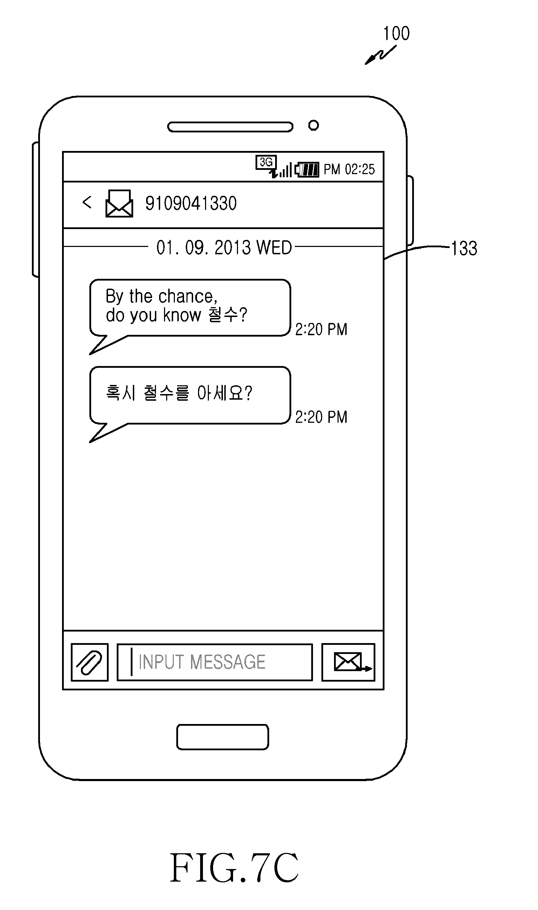

FIG. 5D shows a user interface (UI) operation image screen of an electronic device where a text message 513 may be displayed, which is translated into Chinese from Korean text message input as a reply to a received Chinese text message, and transmitted by the electronic device 100. Device 100 receives a text message in a second country's language, automatically translates a reply in a main or target language into the second county's language and transmits the translated reply. For example, when receiving a Chinese text message, the electronic device 100 may translate the received text message according to different methods into a main or target language and may output the translated text message to the electronic device 100. The methods include the operation of translating into Korean, the operation of translating into English set as the target language in the electronic device 100, the operation of selecting a Chinese text message and translating the selected text message into Korean which is a main language or a target language (for example, English), and the translation operation when a text message includes two or more languages as shown in FIG. 7A. When a reply to a received Chinese text message is input, the translation program 114 translates the input reply into Chinese which is a language of the received text message and transmits the translated reply as shown in FIG. 5C, using an online translation program through the internet or on a specific server as shown in FIG. 5E. For anther example, in response to determining a language of a received text message is a second country's language (English) and a reply is received in Korean, the electronic device 100 may translate the reply into English and display the translation automatically on the electronic device 100 itself.

Furthermore, when a received messages is in a second country's language (English) and a main language of the electronic device 100 is Korean, the electronic device 100 may translate a received English text message into Korean and display the translated text message. When a reply is input in a third country's language (for example, Chinese), not in Korean, a main language of the electronic device 100, the electronic device 100 may translate the reply into English and transmit the translated reply.

Reference numeral 513 indicates that the electronic device 100 may receive a Chinese text message, translate the Chinese text message into a main or a target language of the electronic device 100, and may output the translated text message to the electronic device 100 itself. The electronic device 100 may receive an input of a reply to the received Chinese text message in a main or target language of the electronic device 100, or in a third country's language, translate the input text message into Chinese and transmit the translated text message, and may output the transmitted text message to the electronic device 100 itself. Device 100 may receive a Chinese text message, and automatically translate the received Chinese text message. When the received text message is not displayed on a screen, the electronic device 100 may select (operation 517) a portion 515 of the received text message, translate the selected text message into a main or target language of the electronic device 100, and output the translated text message.

FIG. 5E shows a user interface (UI) operation image screen of an electronic device 100 that receives a Chinese text message, automatically selects a portion of the received text message, translates the selected text message portion or entire message dialogue including the selected message, and may output content of the translated text message to the electronic device 100 itself. Device 100 may translate a received Chinese text message by using an online translation program of an online network service such as the internet or a specific server. The electronic device 100 outputs translated content 521 in the translation target language. In addition, when translation of a text message in the second country's language is performed by an online translation program on the internet, not by the translation program 114 included in the memory 110 of the electronic device 100, the electronic device 100 may provide a menu for allowing a reply to be input as shown in 508 and 511 in FIG. 5C.

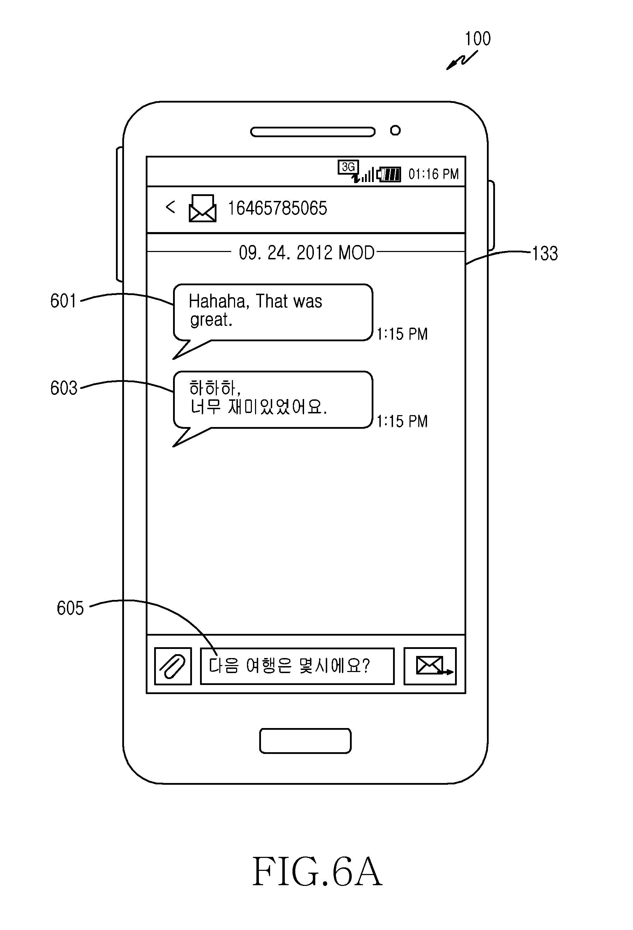

FIG. 6A shows a user interface (UI) operation image screen of an electronic device 100 that may determine Korean as a main language, receive a text message in a second country's language, determine the second country's language of the received text message, translate the text message in the second country's language into the main language, and may display the translated text message on the electronic device 100 itself. Also, when the electronic device 100 receives input reply text in the main language in response to the text message in the second country's language, the electronic device 100 may translate the reply in the main language into the second country's language. For example, the electronic device may receive a text message 601 in English, and determine its language and translate and output the text message as text message 603 in Korean. The electronic device 100 may receive an input 605 of a reply in Korean on a screen which is outputting the received text message 601 in English, and translate the input Korean text message 605 into English which is a language of the received text message through the translation program or the online translation program.

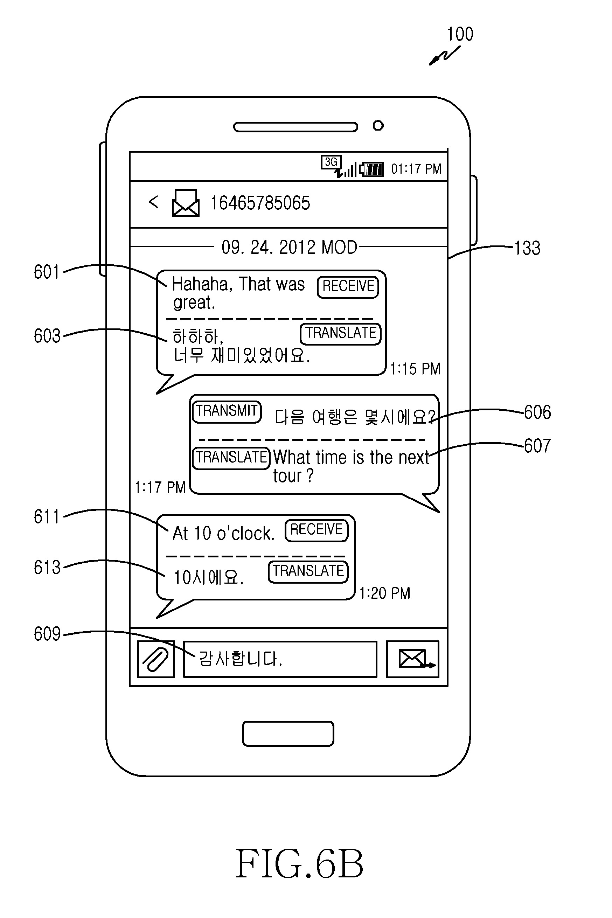

FIG. 6B shows a user interface (UI) operation image screen of an electronic device 100 that may receive a text message input in a main language or a third country's language as a reply to a text message in the second country's language, translate the input text message into the second country's language, transmit the translated text message in the second country's language, and output the transmitted text message to the electronic device 100 itself. For example, the electronic device 100 may receive a text message 605 input in Korean as a reply (FIG. 6A). When a language of the received text message 605 in Korean is not identical to a language of the received text message 601 in English, the electronic device 100 may translate the text message 605 in Korean into a text message (content 607) in English. The electronic device 100 may transmit and display the text message (content 607). For another example, the electronic device 100 may output a first received text message in a first country's language and a first text message translated into a second country's language, or a second text message input as a reply in a second country's language and a second text message translated into the first country's language. Device 100 may output a received text message 601 in English, and a text message 603 translated into Korean from the received text message 601 in English. Also, in response to transmitting a reply to a received text message, the electronic device 100 may output a text message 606 input in Korean and a text message 607 translated into English from the input Korean text message 606. Device 100 may discriminate between text messages in a dialogue format such as a received text message 601 or 611 and a corresponding translated text message 603 corresponding to 601, or 613 corresponding to 611, and a transmitted text message 606 and a corresponding translated text message 607.

FIG. 7A shows a user interface (UI) operation image screen of an electronic device 100 that may receive a text message in a second country's language, which has a portion in a third country's language. The electronic device 100 may translate the text message in the second country's language in response to predetermined rules but output the portion in the third country's language unchanged without translation. Device 100 with Korean as a main language receives text message 701 in a second country's language (Chinese) and a language of a text 702 may be in a third country's language. The electronic device 100 may compare a text 702 in English and text included in the text message 701 in Chinese using predetermined rules and may translate just Chinese text 703 in response to the comparison, or translate the text message 701 in Chinese and a text 702 in English. The predetermined rules determine that an English portion of a Chinese text message is not translated, when first and last letters are Chinese and the text 702 in English does not include a subject or a verb, or when the number of Chinese letters (or words) is greater than that of English letters (or words). In addition, different rules may be used for comparing text in at least two languages. The electronic device 100 may also in another embodiment, translate the text 702 in English and the text message 701 in Chinese and output the translated result.

For example, the electronic device 100 may determine that a received text message (for example 701) includes text in Chinese and text 702 in English. The electronic device 100 may use the translation program 114 or online translation program (not shown), to translate Chinese text excluding the text 702 in English from the text message 701 in Chinese into Korean, translate the text 702 in English into Korean, and may output the translated results to the electronic device 100 itself.

The electronic device 100 may receive a text message in a second country's language including a text in a third country's language, and receive an input, as a reply, of a text message in main language including a text in a third country's language, or in a fourth country's language. For example, the electronic device 100 may receive an input as a reply to a received text message 701 in Chinese including the text 702 in English. The electronic device 100 may receive the input of a text message 705 in Korean including text 706 in English in a certain area of the touch screen 133.

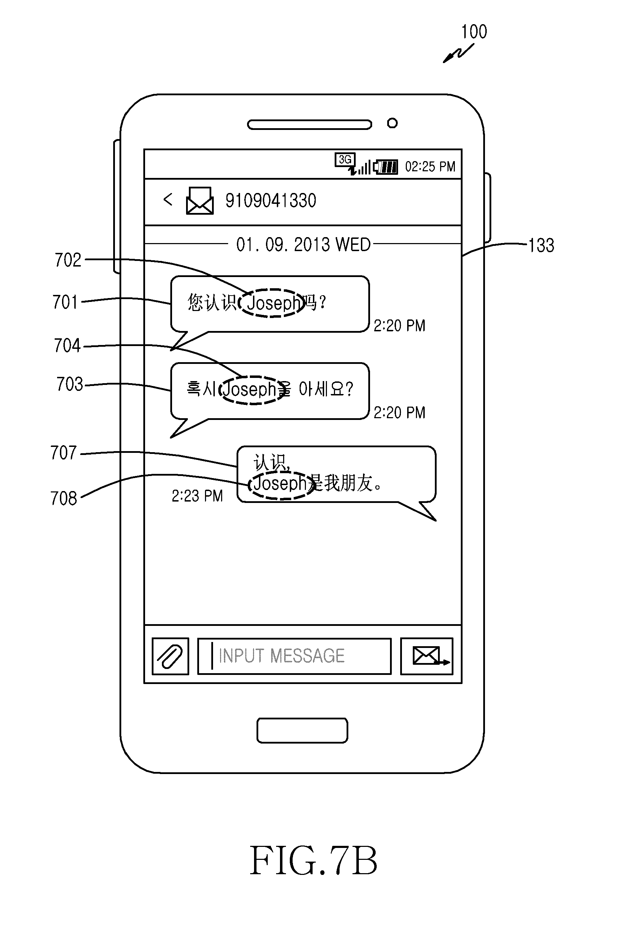

FIG. 7B shows a user interface (UI) operation image screen of an electronic device 100 that may translate a text message input as a reply into a text message in a second country's language including a received text in a third country's language, and transmit the translated result. The electronic device 100 may receive, as a reply, an input of a text message in Korean and English as shown in 705 of FIG. 7A, translate the reply into a text message in Chinese and English as shown in 707 of FIG. 7B, transmit and output the translated reply. A language (Korean or English) of a text included in the input text message 705 of FIG. 7A may be compared with a language (Chinese or English) of a text included in the received text message 701. The electronic device 100 may not translate English 706 which is a language commonly included in the input text message 706 and the received text message 701. Furthermore, the electronic device 100 may not perform translation when a text does not include a subject and a verb or where the text comprises a single word.

Input text message 705 of FIG. 7A in Korean and English is compared with received text message 701 in Korean and Chinese, and a text 706 in English commonly included is not translated. For another example, the electronic device 100 may determine not to translate text 706 in English containing at least two words comprising nouns, or adjectives and nouns, unless it includes at least two words comprising both a noun and a verb. So device 100 may translate the input text message 705 of FIG. 7A and the text 706 of FIG. 7A in English into a text message 707 in Chinese and text 708 in English.

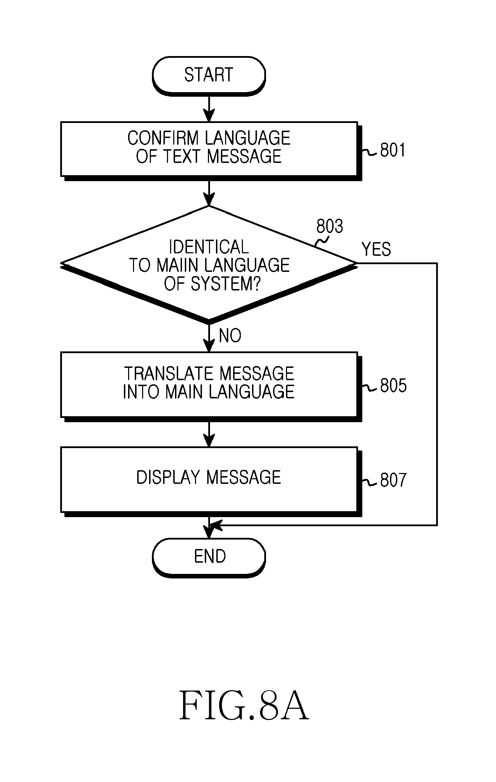

FIG. 8A shows a flowchart of a method of operation of an electronic device 100 that may determine languages of text forming a received text message, determine whether the languages of the received text message is the same as a main or target language of the electronic device 100, translate the received text message into the main or target language of the electronic device 100, and may output the translated text message to the electronic device 100 itself. In operation 801, the electronic device 100 may determine languages of texts forming the received text message by comparison of the text with a character standard such as standard character encoding in order to determine the languages of the texts forming the received text message. For example, the electronic device 100 may process data with a binary electrical signal of 0 or 1 indicating a character is found in a particular language character set and in an expected letter sequence, store, and output the processed data. Device 100 may use a standard character encoding such as the American Standard Code for Information Interchange Code (ASCII Code) capable of representing languages, numbers, special characters, and symbols, for example, or Unicode. The electronic device 100 may process data capable of representing characters, symbols, equations, or numbers, for example, using the standard text coding such as the ASCII code, or the Unicode, configure operation 301 of FIG. 3B by using the standard character encoding, output the data to the electronic device 100 itself, store the standard character encoding such as languages, numbers, special characters, and symbols, for example, into the memory 110 in an encoding scheme, and may process them.

The electronic device 100 may receive a text message through a communication system, and determine languages of texts by using the standard character encoding such as the Unicode. For example, in Unicode 2.0, a 3-set Korean alphabet character code range (240 in number) may be determined in the range as follows:
Classification 0×1100∼0×1112 (19)
Modem initial consonant 0×1113∼0×1159 (71)
Old initial consonant 0×115F
Initial consonant fill code 0×1161∼0×1175 (21)
Modem final consonant 0×1176∼0×11A2 (45)
Medial vowel fill code 0×1160
Modem final consonant 0×11A8∼0×11C2 (27)
Old initial consonant 0×11C3∼0×11F9 (55).

In addition, a character set may be determined by designating characters or commands represented by codes included in the range. The character set may include control characters for controlling printing and communication as well as characters, numbers, and special characters, for example. Accordingly, the electronic device 100 may identify a language by means of the standard character encoding forming texts of a received text message. Text message data may include an identifier representing a type of language, a county code or a language code enabling a country using the language to be determined.

For example, the electronic device 100 may use the Unicode with the hexacode as the character standard. The Unicode may have code values corresponding to alphabets capable of representing English, and code values corresponding to consonants or vowels capable of representing Korean. Accordingly, when 'Hello' in English is input as a text message through an input device of the second electronic device (not shown), the hexacode may be '<%-U+0048-%><%-U+0065-%><%-U+006C-%><%-U+006C-%><%-U+006F-%>', the second electronic device (not shown) may transmit the text message to the electronic device 100. When the electronic device 100 receives the text message, a corresponding text may be converted from hexacode '<%-U+0048-%><%-U+0065-%><%-U+006C-%><%-U+006C-%><%-U+006F-%>' included in the text message data and output to the electronic device 100. In addition, when a hexacode value included in the receive text message data is in a hexacode range corresponding to alphabets (standard character encoding) of English or a character set (words), the electronic device 100 may determine a language of the received text message as English.

In determining languages of text, the electronic device 100 may determine the languages by directly comparing the standard character encoding or a character set, or by confirming a standard character encoding code range. In operation 803, the electronic device 100 may determine whether a language of a text is used by the received text message is the same as a main or target language of the electronic device 100. For example, the electronic device 100 may determine whether the standard character encoding of text is included in a standard character encoding range of a main or target language. In determining languages of text, the electronic device 100 may identify language of the text or a portion of the text. In response to determining that languages of text forming the received text message are identical to the main or target language, the electronic device 100 may terminate a process of FIG. 8A.

In response to determining that languages of texts forming the received text message are different to the main or target language, device 100 may translate the received text message into text of the main or target language. For example, referring to 'Hello' 301 of FIG. 3B, the electronic device 100 may process the Unicode of the standard character set. The electronic device 100 may confirm the standard character encoding or a character set corresponding to 'Hello'. When the Unicode corresponding to English 'Hello' is '00480065006C006C006F' due to Unicode rules corresponding to English, Korean Unicode '\uC548\uB155\uD558\uC138\uC694' corresponding to the Unicode '00480065006C006C006F' may be confirmed. The electronic device 100 may convert '00480065006C006C006F' into '\uC548\uB155\uD558\uC138\uC694'. The converted '\uC548\uB155\uD558\uC138\uC694' may be 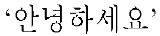 in Korean, and the above-described converting operation may be a translation operation of English 'Hello' into Korean 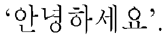

The example herein is described using hexadecimal numbers but device 100 is not limited to use of hexadecimal numbers. Device 100 may identify or fail to identify 'Hello' in the received text message 301 of FIG. 3B. The electronic device 100 may process data including text message 301 according to designated rules such as a program language or a protocol. The electronic device 100 may identify 'Hello' and output '00480065006C006C006F' derived from the received text message on the touch screen 133. Device 100 converts data values of the text message in the second country's language into other data values according to programmed instructions. Similarly, referring to 'this is test message' 301 of FIG. 3B, the electronic device 100 may determine the text as English standard character encoding from a character set forming data of the received text message 301, confirm Korean standard character encoding corresponding to the English standard character encoding, convert the English standard character encoding into Korean standard character encoding, and confirm 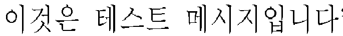 using a Korean standard character encoding and English standard character set.

The electronic device 100 may correct data such as the spelling, an identification code converted according to a sentence format, or a character set, in order to represent an English Unicode of the received text message in Korean. In addition, in operation 805, the electronic device 100 may convert standard character encoding of the received text message into an identification code corresponding to a main or target language of the electronic device 100. In operation 807, the electronic device 100 may output and display text message data converted into a main or target language of the electronic device 100. For example, when the standard character encoding of 301 of FIG. 3B is converted into Korean standard character encoding or a character set, the converted result may be '\uC548\uB155\uD558\uC138\uC694.\20\uC774\uAC83\uC740\20\uD14C\uC2A4\uD2B8\2 0\uBA54\uC138\uC9CO\uC785\uB2C8\uB2E4'. The electronic device 100 may output corresponding text as 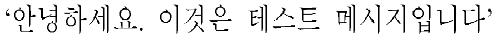 303 of FIG. 3B. The electronic device 100 may represent translated text message content by output as a sound, a signal, or a voice message through the speaker 141 as described in relation to FIGS. 3A to 7B.

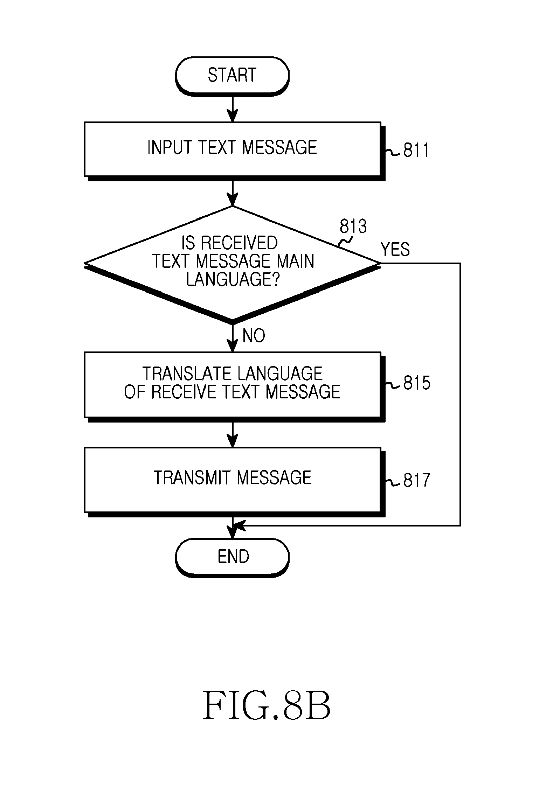

FIG. 8B shows a flowchart of a method of operation of an electronic device 100 that may receive an input of a reply message to a received text message, determine whether a language of the input reply message is identical to a language of the receive text message, translate the input reply message into a language of texts forming the received message, and may transmit the translated reply message. In operation 811, the electronic device 100 may receive an input of a reply to a text message in a second country's language. For example, the electronic device 100 may translate the received text message into a main or target language of the electronic device 100 through the translation program 114, output the translated text message, and may receive an input of a reply to the received text message in the second country's language. In operation 813, the electronic device may determine whether codes representing characters of standard character encoding or a character set included in the reply text message data are in the main language.

For example, referring to FIG. 6A, the electronic device 100 may use the Unicode formed of hexacode of a received text message data in a second country's language as a character standard, and a text message which is being output to the electronic device 100 " Hahaha. That was great" may be a result of being converted into corresponding characters from hexacode "<%-U+0048-%><%-U+0061-%><%-U+0068-%><%-U+0061-%><%-U+0068-%><%-U+0061-%><%-U+002C-%> <%-U+0054-%><%-U+0068-%><%-U+0061-%><%-U+0074-%> <%-U+0077-%><%-U+0061-%><%-U+0073-%> <%-U+0067-%><%-U+0072-%><%-U+0065-%><%-U+0061-%><%-U+0074-%>", which is included in the received text message data. The electronic device 100 may confirm that the hexacode of the received text message data is included in a hexacode range corresponding to the English standard character encoding (alphabet) or a character set (a word), and determine a language of the received text message as English.

The electronic device 100 may receive an input 605 of a reply to the received text message. The electronic device 100 may receive an input 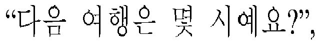 and converts the input text message into corresponding hexacode "<%-U+B2E4-%><%-U+C74C-%> <%-U+C5EC-%><%-U+D589-%><%-U+C740-%> <%-U+BA87-%> <%-U+C2DC-%><%-U+C5D0-%><%-U+C694-%><%-U+003F-%>". The electronic device 100 may confirm that the hexacode of the input text message data is included in a hexacode range corresponding to standard character encoding (consonants or vowels) or a character set (words) of Korean, and determine a language of the input text message as Korean.

The electronic device 100 may compare a hexacode range included in the received text message data and a hexacode range included in the input text message data, and determine two languages of the two text messages are identical. Device 100 may compare a main language of the electronic device 100 and a language of the received text message. When the languages are determined to be identical, the electronic device 100 may terminate a process of FIG. 8B, and transmit the input text message. When the languages are not identical, the electronic device 100 may perform operation 815 and translate the input text message into a language of a target to which the input text message is to be transmitted.

For example, referring to FIG. 6A, the electronic device 100 may confirm that a language of the received text message is English. The electronic device 100 may convert components (codes such as standard character encoding, or a character set) of hexacode "<%-U+B2E4-%><%-U+C74C-%> <%-U+C5EC-%><%-U+D589-%><%-U+C740-%> <%-U+BA87-%> <%-U+C2DC-%><%-U+C5D0-%><%-U+C694-%><%-U+003F-%>" corresponding to a text message 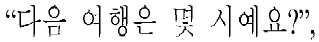 into components (codes such as standard character encoding, or a character set) "<%-U+0057-%><%-U+0068-%><%-U+0061-%><%-U+0074-%> <%-U+0074-%><%-U+0069-%><%-U+006D-%><%-U+0065-%> <%-U+0069-%><%-U+0073-%> <%-U+0074-%><%-U+0068-%><%-U+0065-%> <%-U+006E-%><%-U+0065-%><%-U+0078-%><%-U+0074-%> <%-U+0074-%><%-U+006F-%><%-U+0075-%><%-U+0072-%><%-U+003F-%>" corresponding to English. When the hexacode corresponding to English is converted into text, the English text message may be "What time is the next tour?" translated from the input text message in Korean 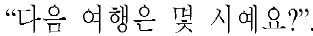 In operation 817, the electronic device 100 may transmit text message data including hexacode corresponding to the translated English text message "What time is the next tour?" and may terminate the process of FIG. 8B.

When the methods are implemented in software, a computer-readable storage medium storing one or more programs (software modules) can be provided. The one or more programs stored in the computer-readable storage medium are to be executable by one or more processors in the electronic device 100. The one or more programs can include instructions allowing the electronic device 100 to execute methods herein. These programs can be stored in a random access memory (RAM), a nonvolatile memory including a flash memory, a read only memory (ROM), an electrically erasable programmable read only memory (EEPROM), a magnetic disc storage device, a Compact Disc-ROM (CD-ROM), a Digital Versatile Disc (DVD) or other types of optical storage device, or a magnetic cassette. The programs can also be stored in a memory formed of combination of some or all of them.

While the invention has been shown and described with reference to certain preferred embodiments thereof, it will be understood by those skilled in the art that different changes in form and details may be made therein without departing from the spirit and scope of the invention as defined by the appended claims.

The above-described embodiments can be implemented in hardware, firmware or via the execution of software or computer code that can be stored in a recording medium such as a CD ROM, a Digital Versatile Disc (DVD), a magnetic tape, a RAM, a floppy disk, a hard disk, or a magneto-optical disk or computer code downloaded over a network originally stored on a remote recording medium or a non-transitory machine readable medium and to be stored on a local recording medium, so that the methods described herein can be rendered via such software that is stored on the recording medium using a general purpose computer, or a special processor or in programmable or dedicated hardware, such as an ASIC or FPGA. As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein. The functions and process steps herein may be performed automatically or wholly or partially in response to user command. An activity (including a step) performed automatically is performed in response to executable instruction or device operation without user direct initiation of the activity. No claim element herein is to be construed under the provisions of 35 U.S.C. 112, sixth paragraph, unless the element is expressly recited using the phrase "means for."

## Claims

1. A method of processing text message data in an electronic device, comprising
receiving first text data;
determining a first language of the first text data;
translating the first text data into second text data in a predetermined second language in response to determining the first language; and
outputting the second text data.

2. The method of claim 1, wherein the first language of the first text data is determined in response to a characteristic of characters comprising the first text data set and a characteristic of the encoding character set used to represent the characters.

3. The method of claim 1, wherein the second text data is converted into the second language corresponding to the first text data using a language table associating words of a first language with corresponding words of a second language, stored in the electronic device.

4. The method of claim 1, wherein the first language is determined in response to code values of a standard character encoding set or a character set, of the first text data, or language identification codes included in the first text data.

5. The method of claim 1, further comprising comparing the first language of the first text data with the second language of the second text data,
wherein the first or second language is identified using codes included in standard character encoding or a character set of the first or second text data, or language identification codes included in the first or second text data.

6. The method of claim 1, wherein the predetermined second language is determined as at least one of a country language used in an operating system of the electronic device and a country language corresponding to a code of a country associated with the electronic device. language is selected via data entered using a displayed menu indicating different languages.

7. The data processing method of claim 1, wherein the predetermined second language is selected via data entered using a displayed menu indicatif different languages.

8. The method of claim 1, further comprising displaying the first text data in the first language or the second text data in the second language.

9. An electronic device comprising:
at least one processor;
at least one communication system communicating with a second electronic device;
at least one memory; and
at least one program stored in the memory and executed by the at least one processor,
wherein the program comprises instructions for receiving first text data in a first language, enabling input of second text data in a second language, which is different from the first language, as a reply to the first text data, transmitting third text data in the first language corresponding to the second text data in response to input of the second text data.

10. The electronic device of claim 9, wherein the program comprises instructions for displaying fourth data in the second language corresponding to the first text data, or the first text data and fourth text data in the second language corresponding to the first text data and automatically translating the second text data into third text data in the first language in response to the input second text data.

11. The electronic device of claim 9, wherein the program comprises displaying the second text data, or the second text data and the third text data.

12. The electronic device of claim 9, wherein the program comprises instructions for comparing the first language of the first text data with the second language of the second text data,
wherein the first or second language is identified using codes included in standard character encoding or a character set of the first or second text data, or a language identification codes included in the first or second text data.

13. The electronic device of claim 9, wherein the program comprises instructions for determining the third language in response to code values included in standard character encoding or a character set of the first text data, or language identification codes included in the first text data.
